# EUROPEAN PATENT APPLICATION

(11) **EP 4 847 383 A1**
(43) Date of publication of application: **02.12.2026**
(21) Application number: 25178978.0
(22) Date of filing: 27.05.2025
(51) Int. Cl.: B64C 25/56, B64C 27/00

(54) **A ROTORCRAFT WITH A SPONSON PROVIDING A FLOAT BAG ACCOMMODATION**

(71) Applicant: AIRBUS HELICOPTERS DEUTSCHLAND GmbH, 86609 Donauwörth (DE)
(72) Inventor: FINK, Axel, 86609 DONAUWÖRTH (DE)
(74) Representative: GPI Brevets

(57) **Abstract**

The invention is related to a rotorcraft with a sponson (6a) that comprises a sponson carrier frame (13a) and provides a float bag accommodation (8) for accommodating an uninflated inflatable float bag (7a), the inflatable float bag (7a) being connected to the sponson (6a) via a float bag stabilization device (18) that comprises: a first fixation girt (9a) attaching the inflatable float bag (7a) to the sponson carrier frame (13a); and a pivotable attachment device (11a) attaching to the inflatable float bag (7a) via a second and a third fixation girts (10a, 10b), the pivotable attachment device (11a) comprising: a first mounting area pivotally mounted to the sponson carrier frame (13a) via an associated pivot hinge (15a), a second mounting area attached to the sponson carrier frame (13a) via a retention strap (12a), and a third mounting area attached to the second and third fixation girts (10a, 10b).

## Description

The present invention is related to a rotorcraft with a fuselage and at least one sponson that protrudes laterally from the fuselage and comprises at least one sponson carrier frame, wherein the at least one sponson provides a float bag accommodation.

If rotorcrafts are foreseen for flight missions over areas of sea, emergency situations may occur in which the rotorcrafts must ditch into the water. The term "ditching" means that the rotorcrafts perform a more or less controlled landing in the water. In order to prevent at least sinking of ditched rotorcrafts, they must at least be equipped with a suitable emergency floatation system that is activated upon ditching of the rotorcraft into the water, as e.g. described in the document US 7,434,600 B1.

In general, such a suitable emergency floatation system includes inflatable float bags, which are sometimes also referred to as "inflatable balloons". The inflatable float bags are usually inflated prior to ditching of a given rotorcraft into water and, then, function as emergency floats.

Rotorcrafts with skid-type landing gears usually have respective inflatable float bags attached to landing tubes of their skid-type landing gears, wherein associated boarding steps may support the respective inflatable float bags in inflated state. For those rotorcrafts having a relatively small architecture, with a given membrane tension effect due to a partial wrap of the boarding step by the loaded inflatable float bag membrane an almost linear support provided by the boarding step to the float bag in inflated state may be sufficient to ensure equilibrium.

Each one of documents US 3,507,466 A, EP 0 001 607 A2, and US 3,506,222 A describes an emergency flotation assembly for a helicopter comprising inflatable tubular float members attached to respective helicopter skids. By nature, the track of the skid provides a suitable basis for stability in water and the inflatable tubular float members can introduce a respective vertical buoyancy load directly into the skid tubes. However, this is not the case for rotorcrafts with wheel-type landing gears.

For rotorcrafts with wheel-type landing gears, the inflatable float bags can be directly attached to a fuselage structure of the rotorcraft or to protruding structural elements like the sponsons. The sponsons are laterally protruding structures at both sides of the rear fuselage of the rotorcraft, which are mainly used to house the retractable main landing gear. The inflatable float bags may be attached to such structure by means of several fixation girts which are fitted to the inflatable float bags by means of load patches.

In the case of a direct fixation of the inflatable float bags to the airframe, the inflatable float bags may be supported by the airframe side shells or even hatches, e. g., landing gear hatches.

Document US 9,169,008 B2 describes a buoyancy system for an aircraft that comprises an inflatable float bag and a cover. The buoyancy system includes an extensible connection means fastened to the cover to connect the cover to a compartment of the aircraft, which enables the cover to be retained and to be moved transversely during inflation of the float bag. However, in this case, the stabilization of the inflatable float bags would require a huge contact surface on the airframe.

Furthermore, since the attachments of the inflatable float bags to the airframe structure are typically offset from the center of lift of the submerged inflatable float bags, an additional support is required to counteract the resulting rotation for keeping the inflatable float bags in the required place.

In the case of a fixation of a given inflatable float bag to a sponson, the inflatable float bag may be supported by the sponson lateral surface. The required contact surface depends on the position of the fixation points, the diameter, length, and inner pressure of the inflatable float bag, as well as an occurring buoyancy load.

Document US 3,004,737 A describes a rotorcraft having an inflatable buoyant supporting structure. The inflatable buoyant supporting structure is stored within the airframe perimeter in compartments. When fully inflated, the inflatable buoyant supporting structure is in contact with both the lower portions of the fuselage and a door of the compartments. However, with the inflatable buoyant supporting structure being so close to and underneath the rotorcraft, such arrangement may result in a lack of roll stability for the rotorcraft in the water.

Document US 2,940,700 A describes an emergency buoyancy device for helicopters comprising on either side of the helicopter cabin a tubular frame structure anchored at its assembling joints to corresponding assembling joints of truss members of the helicopter framework. The emergency buoyancy device comprises buoyancy ballonets. A fabric panel holds back the buoyancy ballonet in its inflated condition, wherein the ballonet is fastened along the entire length of the housing of the tubular structure. Such allocation of the buoyancy ballonets is advantageous in terms of stability but would lead to a substantial immersion of the helicopter in the water after ditching.

More particularly, the Y-position of the inflatable float bag in direction of the lateral axis of the rotorcraft defines the track of the inflatable float bag and is relevant to the roll stability of the rotorcraft in the water that faces the risk of e. g., capsizing under severe sea conditions, whereas the Z-position of the inflatable float bag in direction of the vertical axis of the rotorcraft is relevant to the water line and submersion level of the rotorcraft. That is, a sufficiently low Z-position of the inflatable float bag allows the inflatable float bag to be submerged in the water as much as possible to achieve the lowest possible water line of the rotorcraft.

The arrangement of emergency floats, and consequently the required distance between the emergency floats and the airframe of the rotorcraft, may vary depending on the size of the rotorcraft. However, the inflatable float bag would require large tracks due to the relatively high center of gravity of the rotorcrafts and a low position of the inflatable float bags with respect to the airframe, which leads to the need of a supporting structure holding the inflatable float bag apart from the airframe of the rotorcraft.

For heavy rotorcrafts, a suitable emergency floatation system would especially require large inflatable float bags to provide for sufficient buoyancy in a ditching case. To endure the normal functioning of the inflatable float bag, it is imperative to ensure the equilibrium of the inflatable float bag during ditching and in the static case after ditching. The fixation and equilibrium of the inflatable float bag may be managed using a certain number of straps connected to the sponson structure and by the provision of sufficient support contact surface at the lateral side of the sponson. Therefore, to provide sufficient support to the inflatable float bags, the required contact surfaces of the sponsons would be considerably large. As a result, the size of the sponson, i. e., extensions of the sponson in lateral and vertical directions, would become quite large.

Sponsons, if only being designed as an aerodynamic cover for the main landing gear, can be kept relatively small in volume whilst ensuring an acceptable aerodynamic behavior. However, as mentioned above, when being used as a support structure for the inflatable float bags, the sponsons may become considerably large, which would lead to negative impacts on the aerodynamic efficiency of the rotorcraft. A respective aerodynamic penalty could be drag and vortex generation especially when the sponsons interact with the intermediate fuselage, i. e., the transition from center fuselage to the tail boom.

One conventional means to reduce required supporting surface of the sponson is to lower the lowest point of the fixation of the inflatable float bags underneath the lower sponson level. As such, the basis between the lowest fixation point and the lateral support provided by the sponson structure becomes larger and the required counter moment becomes proportionally smaller. However, a certain amount of contact surface would still be required for ensuring the equilibrium of the inflatable float bags, which is often still far too large in comparison to the available surface for an optimal sponson design and would lead to heavy and large sponson geometries.

It is, therefore, an object of the present invention to provide a new rotorcraft with a new arrangement for attaching an inflatable float bag to a sponson which would reduce the need of large supporting surfaces and improve the aerodynamic efficiency of the rotorcraft.

This object is solved by a rotorcraft comprising the features of claim 1. More specifically, according to the present invention the rotorcraft comprises a fuselage and at least one sponson that protrudes laterally from the fuselage and comprises at least one sponson carrier frame. The at least one sponson provides a float bag accommodation that is configured for accommodating an inflatable float bag in uninflated state. The inflatable float bag is connected to the at least one sponson via at least one float bag stabilization device that is configured for stabilizing the inflatable float bag in inflated state during an emergency floatation case. The at least one float bag stabilization device comprises at least one first fixation girt and at least one pivotable attachment device. The at least one first fixation girt attaches the inflatable float bag to the at least one sponson carrier frame. The at least one pivotable attachment device is attached to the inflatable float bag via at least one second fixation girt and at least one third fixation girt. The at least one pivotable attachment device comprises a first mounting area, a second mounting area, and a third mounting area. The first mounting area is pivotally mounted to the at least one sponson carrier frame via an associated pivot hinge. The second mounting area is attached to the at least one sponson carrier frame via a retention strap. The third mounting area is attached to the at least one second fixation girt and the at least one third fixation girt.

The inventive rotorcraft provides a new fixation concept of an inflatable float bag which enables adequate stability of the inflatable float bag in the inflated state. Such fixation concept also provides the opportunity to stable the inflatable float bag in the inflated state without supporting surfaces from the sponsons.

Preferably, the at least one pivotable attachment device comprises the first fixation girt as an upper girt. The first fixation girt may be connected to the upper side of the inflatable float bag and the upper side of the sponson. The first fixation girt may be load free in the vertical direction and only transfer any existing load in the lateral direction such as to hold the inflatable float bag in the inflated state in place.

Preferably, a pair of fixation girts, i. e. the second and third fixation girts, is fixed at the lower portion of the inflatable float bag and attached to a lower fixation point on the pivotable attachment device. Such a lower fixation point may be provided as the lowest fixation point for the inflatable float bag which is close to the line of action of Z-load, i. e. load of buoyancy in direction of vertical axis, of the inflatable float bag in the inflated state such that the equilibrium of the inflatable float bag in the inflated state at the action of the Z-load would require no contact surface for lateral support.

**In** other words, the buoyancy load acts in its line of action, and the lower fixation point is aligned with this line of action. As a result, there is no parasitic moment on the inflatable float bag in the inflated state that is required to be balanced by, e. g., the sponson structure. Thus, the sponson may be designed without the support surface that is conventionally required, resulting in a sponson with reduced size. Such sponson would be allowed for optimal design in terms of main landing gear integration and aerodynamic efficiency. Advantageously, such sponson design would be independent from the inflatable float bag equilibrium requirements, which would lead to a sponson that is smaller, lighter, and less costly.

Furthermore, for conventional arrangements with a simple extraction lever that is connected to the inflatable float bag, the effect of oblique loads on the lower fixation point would be relatively high. Such oblique loads are parasitic transverse load components acting out of the plane of the extraction lever. **In** the presence of such load components, the extraction lever is loaded in bending hence requiring a stiff hinge and a strong mechanism or an additional stabilizing strap. Both solutions would result in increased weight.

In contrast to conventional arrangements with a simple extraction lever, since the at least one pivotable attachment device is provided with three mounting areas and attached to the inflatable float bag via the pair of girts, such oblique loads on opposite directions at the lower fixation point may be at least partially cancelled by each other. If desired, the pair of girts may be arranged symmetrically at the lower fixation point thereby introducing only a Z-load and eliminating any oblique loads at the lower fixation point.

According to some aspects, the first mounting area is spaced apart from the second mounting area, and the second mounting area is spaced apart from the third mounting area.

According to some aspects, the at least one pivotable attachment device comprises an at least essentially triangular shape.

By way of example, the at least one pivotable attachment device may comprise an essentially triangular shape that is hinged at one point, i. e., at the first mounting area via the associated pivot hinge to an internal structure of the sponson, i. e., the at least one sponson carrier frame. A second point of the essentially triangular shape provides a fixation point, i. e., at the second mounting area for the retention strap, and a third point of the essentially triangular shape provides the lower fixation point, i. e., at the third mounting area, for attaching the inflatable float bag via the pair of girts.

The arrangement of the at least one pivotable attachment device with the associated pivot hinge and the retention strap provides the lower fixation point of the inflatable float bag with an extractable mechanism. By way of example, extraction of the pivotable attachment device is accomplished automatically as an effect of the inflation procedure of the inflatable float bag. The at least one pivotable attachment device may swivel around the pivot hinge from a retracted position to an extended position, and the lower fixation point may move from the inside of the sponson to a position close to, or aligned to, the line of action of the buoyancy load. Such mechanism in the extended position overcomes the offset distance from the sponson lateral surface to the line of action of the buoyancy load, which would also lower the loads applied on the pair of girts.

Preferably, the at least one pivotable attachment device in a retracted position may be substantially housed within the sponson, and the retention strap is in a relaxed state, i. e., not tightened. After extraction process of the at least one pivotable attachment device, the retention strap is tensioned and holds the at least one pivotable attachment device at the suitable position of with respect to the line of action of the buoyancy load.

By way of example, the pivot hinge is connected to the at least one sponson carrier frame. If desired, the at least one sponson carrier frame may comprise a truss framework with an upper strut loaded in compression and a lower strut loaded in tension. The pivot hinge is also connected to the sponson former to provide for lateral stability for load introduction.

According to some aspects, the at least one pivotable attachment device comprises at least a first attachment bar, a second attachment bar, and a third attachment bar.

Preferably, the first attachment bar is connected to the second attachment bar at the first mounting area and to the third attachment bar at the second mounting area.

Preferably, the second attachment bar is connected to the third attachment bar at the third mounting area.

According to some aspects, the at least one pivotable attachment device is at least essentially accommodated in the at least one sponson in a storage position.

The at least one pivotable attachment device may be pivotable around the pivot hinge upon occurrence of the emergency floatation case from the storage position into a float bag stabilization position.

According to some aspects, a first distance between the third mounting area of the at least one pivotable attachment device in the float bag stabilization position and the fuselage is greater than a second distance between the pivot hinge and the fuselage.

According to some aspects, the third mounting area is at least positioned near a center line of the inflatable float bag in inflated state.

According to some aspects, the at least one pivotable attachment device is pivotable around the pivot hinge within an angle range from 90° to 180°.

According to some aspects, the at least one sponson carrier frame comprises at least a first strut which is mounted to the fuselage and a second strut which is mounted to the fuselage.

Preferably, the first strut and the second strut are interconnected via the pivot hinge.

According to some aspects, the fuselage comprises at least one fuselage frame which provides a first attachment point and a second attachment point which are spaced apart from each other.

Preferably, the first strut is attached to the first attachment point and the second strut is attached to the second attachment point.

According to some aspects, the at least one sponson carrier frame comprises a sponson former which is connected to the first strut at the first attachment point and at the pivot hinge.

Preferably, the sponson former is attached to the at least one first fixation girt.

According to some aspects, the first strut and the second strut form a triangular shape with the fuselage.

According to some aspects, in the inflated state of the inflatable float bag the first strut comprises a first line of action, the retention strap comprises a second line of action, and the inflatable float bag comprises a third line of action.

Preferably, the first line of action, the second line of action, and the third line of action intersect in a common intersection point.

According to some aspects, the at least one sponson comprises a sponson compartment that is separated from the float bag accommodation at least by means of a lateral cover.

Preferably, a compressed air bottle is stowed in the sponson compartment for inflating the inflatable float bag upon occurrence of the emergency floatation case.

According to some aspects, the inflatable float bag in uninflated state which is accommodated in the float bag accommodation in the at least one sponson is covered by an external cover.

It should be noted that the various different aspects of the present invention which are described above should not be understood as separated, isolated embodiments. Instead, any feasible combinations of the different aspects are likewise contemplated.

Illustrative embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective view of an illustrative rotorcraft with sponsons according to the present invention,
- Figure 2 shows a perspective view of an illustrative sponson of the rotorcraft of Figure 1, wherein the sponson provides a float bag accommodation for accommodating an inflatable float bag in uninflated state,
- Figure 3 shows a detailed schematic view of the sponson of Figure 2, wherein a partial external structure of the sponson is omitted to show the inner structure of the sponson and a float bag stabilization device for stabilizing an inflatable float bag in inflated state,
- Figure 4 shows an enlarged local view of the float bag stabilization device of Figure 3,
- Figure 5 shows a sectional view of the sponson of Figure 3,
- Figure 6 shows a sectional view of the sponson of Figure 3, wherein the sponson is accommodating the float bag stabilization device and an inflatable float bag in uninflated state,
- Figure 7 shows, in part (A), a schematic functional diagram of the float bag stabilization device of Figure 3, wherein the sponson is accommodating the float bag stabilization device, and in part (B), a schematic functional diagram of the float bag stabilization device of Figure 3, wherein the float bag stabilization device is stabilizing an inflatable float bag in inflated state, and
- Figure 8 shows another schematic functional diagram of the float bag stabilization device of Figure 3, wherein the float bag stabilization device is stabilizing an inflatable float bag in inflated state.

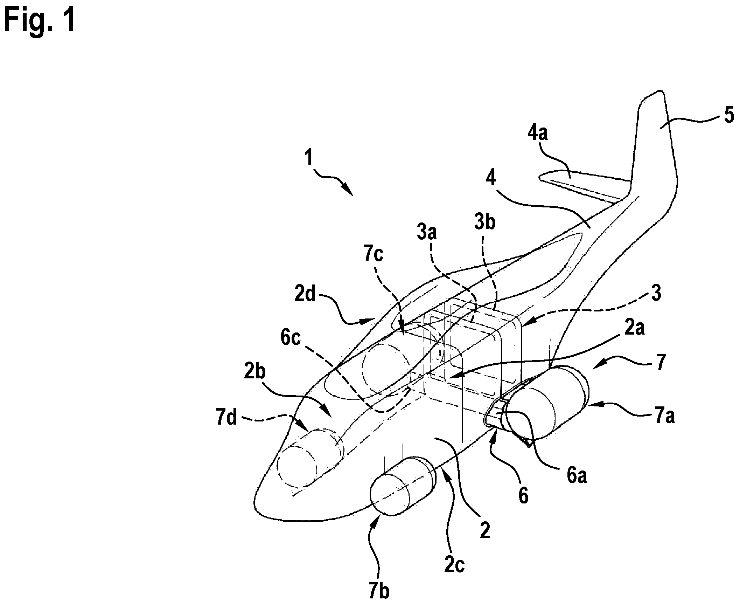

Figure 1 shows a rotorcraft 1 according to one aspect that is exemplarily illustrated as a helicopter. Thus, for purposes of simplicity and clarity, the rotorcraft 1 is hereinafter referred to as the "helicopter 1". The present invention is, however, not limited to helicopters and may likewise be applied to any other rotorcraft or aircraft in general.

Illustratively, the helicopter 1 comprises a fuselage 2 that exemplarily defines a cabin 2a and a cockpit 2b. Illustratively, the fuselage 2 comprises a lower fuselage region 2c and an upper fuselage region 2d. The upper fuselage region 2d may define a roof of the helicopter 1, where at least one multi-blade main rotor for providing lift and forward or backward thrust during operation may be arranged, whereas the lower fuselage region 2c may be connected to a landing gear, which may be exemplarily embodied as a wheel-type landing gear. However, for simplicity and clarity of the drawing, a more detailed illustration and/or labelling of such well-known components of the helicopter 1 including the main rotor and the landing gear, is omitted.

By way of example, the helicopter 1 comprises at least one sponson 6 that protrudes laterally from the fuselage 2. Illustratively, the helicopter 1 comprises a portside sponson 6a on portside of the helicopter 1 and a starboard side sponson 6c on starboard side of the helicopter 1. Illustratively, the fuselage 2 comprises at least one fuselage frame 3. If desired, the at least one fuselage frame 3 is connected to the portside sponson 6a and the starboard side sponson 6c. The at least one fuselage frame 3 may illustratively comprise two fuselage frame 3a, 3b that are substantially arranged in parallel between the two sponsons 6a, 6c.

As shown in Figure 1, the portside sponson 6a and the starboard side sponson 6c are arranged in a rear region of the fuselage 2. Illustratively, the rear region of the fuselage 2 is further connected to a tail boom 4. The aft section of the tail boom 4 preferably further comprises a vertical stabilizer 5 and a horizontal stabilizer 4a.

According to one aspect, the helicopter 1 is provided to accomplish flight missions over water areas, such as e.g. offshore operations, and comprises an emergency floatation system 7. The emergency floatation system 7 is preferably adapted for being activated upon an emergency landing of the helicopter 1 on water, for preventing at least sinking of the helicopter 1. Activation of the emergency floatation system 7 is preferentially triggered operator-independently, i.e. automatically.

Preferably, the emergency floatation system 7 comprises one or more inflatable float bags which are sometimes merely referred to as "float bags", for simplicity and clarity. Illustratively, two float bags are provided on the portside of the helicopter 1, namely a portside rear float bag 7a and a portside front float bag 7b, whereas two other float bags are provided on the starboard side of the helicopter 1, namely a starboard side rear float bag 7c and a starboard side front float bag 7d. However, it should be noted that the number of provided float bags is usually dependent on a size and weight of the helicopter 1.

If desired, the two front float bags 7b, 7d are mounted to a front region of the fuselage 2 close to the fuselage side shells. Illustratively, the two rear float bags 7a, 7c are mounted to the rear region of the fuselage 2 via the sponsons 6a, 6c, respectively. By way of example, the portside rear float bag 7a is installed in a lateral area of the portside sponson 6a, whereas the starboard side rear float bag 7c is installed in a lateral area of the starboard side sponson 6c.

As shown in Figure 1, the illustrated float bags 7a, 7b, 7c, 7d are represented in inflated state. The float bags 7a, 7b, 7c, 7d are preferably inflated upon activation of the emergency floatation system 7 to support and stabilize the helicopter 1 on water. Respective loads of the inflated rear float bags 7a, 7c are transferred to the respective sponsons 6a, 6c, which may be further transferred into the fuselage frames 3a, 3b and fuselage side shells from the respective sponsons 6a, 6c.

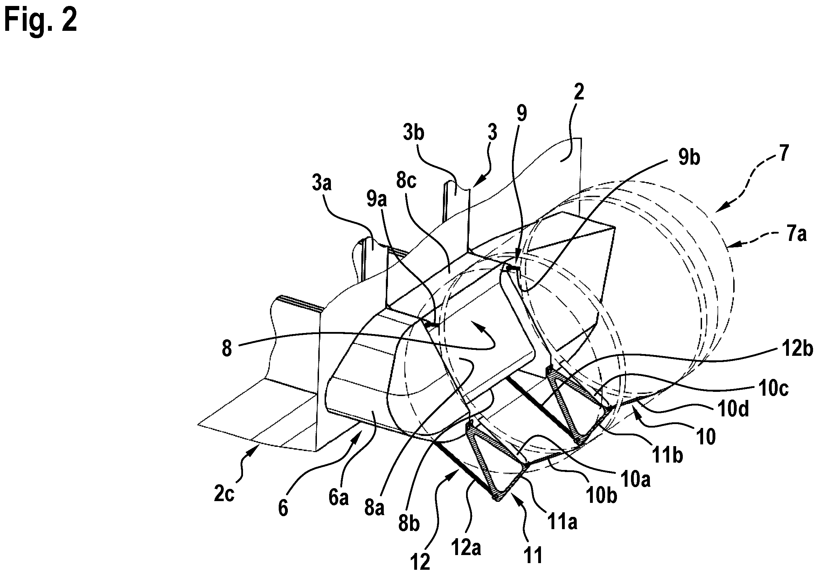

Figure 2 shows the portside rear region of the helicopter 1, where the portside sponson 6a is connected to the portside rear float bag 7a in the inflated state. It should be noted that the portside sponson 6a is illustrated in Figure 2 as representative of the sponsons 6a, 6b in Figure 1. In fact, the portside sponson 6a and the starboard side sponson 6b may have essentially similar mirrored structures, such that the description of the portside sponson 6a and the portside rear float bag 7a may be likewise applied to the starboard side sponson 6b and the starboard side rear float bag 7b. For simplicity and clarity, the portside sponson 6a is hereinafter referred to as the sponson 6a, and the portside rear float bag 7a is hereinafter referred to as the float bag 7a or the inflatable float bag 7a.

As shown in Figure 2, the sponson 6a protrudes laterally from the fuselage 2, and the fuselage frames 3a, 3b support the sponson 6a. The inflated float bag 7a, i. e., the inflatable float bag 7a in inflated state of the emergency floatation system 7 is shown in dashed lines to facilitate a clear illustration of the sponson 6a.

Illustratively, the sponson 6a provides a float bag accommodation 8 that is configured for accommodating the inflatable float bag 7a in uninflated state, i. e., an uninflated float bag. That is, the float bag accommodation 8 accommodates an uninflated float bag before the inflation process that turns it into the inflated float bag 7a in Figure 2.

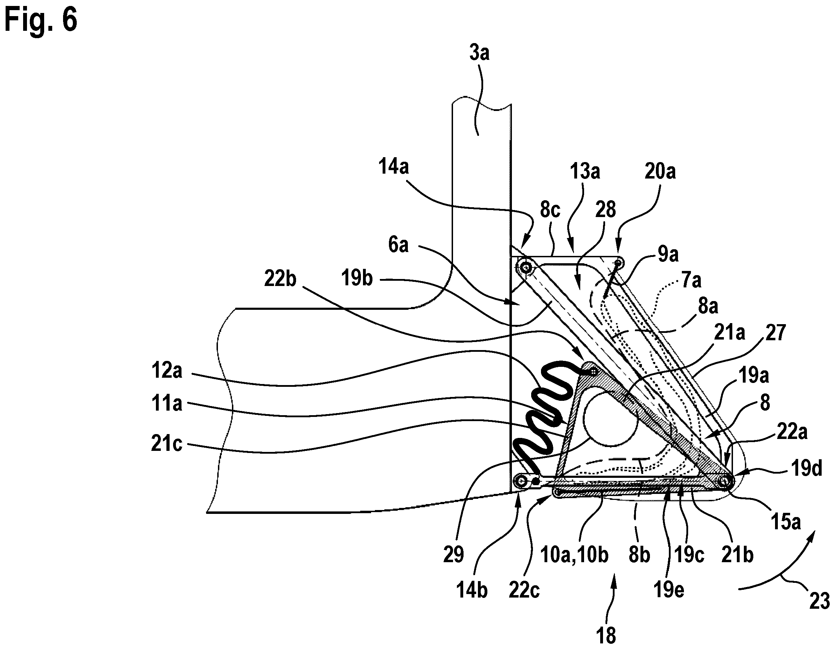

By way of example, the sponson 6a comprises a sponson compartment (e. g. sponson compartment 28 in Figure 6) that is separated from the float bag accommodation 8. The sponson compartment is not visible in Figure 2 as being allocated within respective sponson compartment covers, which includes a sponson compartment lateral cover 8a, a sponson compartment lower cover 8b, and a sponson compartment upper cover 8c. The sponson compartment is separated from the float bag accommodation 8 at least by means of the sponson compartment lateral cover 8a.

Illustratively, the sponson compartment lateral cover 8a and the sponson compartment lower cover 8b provide the float bag accommodation 8. The inflated float bag 7a is illustratively arranged lateral to the sponson 6a close to the sponson compartment lateral cover 8a. The inflated float bag 7a is connected to an upper portion of the sponson 6a via float bag upper fixations 9. The float bag upper fixations 9 illustratively include a first upper fixation girt 9a and a second upper fixation girt 9b. However, if desired, the inflated float bag 7a may be connected to an upper portion of the sponson 6a via only one float bag upper fixation girt 9a or via more than the two upper fixation girts 9a, 9b.

By way of example, the inflated float bag 7a is connected to a lower portion of the sponson 6a via float bag lower fixations 10 and pivotable attachment devices 11 for the lower fixations 10. If desired, the pivotable attachment devices 11 comprise a first pivotable attachment device 11a and a second pivotable attachment device 11b. The first pivotable attachment device 11a is attached to the inflated float bag 7a via a first pair of lower fixation girts 10a, 10b, whereas the second pivotable attachment device 11b is attached to the inflated float bag 7a via a second pair of lower fixation girts 10c, 10d. Similar to the float bag upper fixations 9, if desired, the inflated float bag 7a may be connected to the lower portion of the sponson 6a via only one set of the float bag lower fixations 10 and the pivotable attachment device 11a or via more than the two sets of the float bag lower fixations 10 and the pivotable attachment devices 11a, 11b.

Illustratively, the pivotable attachment devices 11 are attached to the sponson 6a via retention straps 12. By way of example, the first pivotable attachment device 11a is attached to a first retention strap 12a and the second pivotable attachment device 11b is attached to a second retention strap 12b.

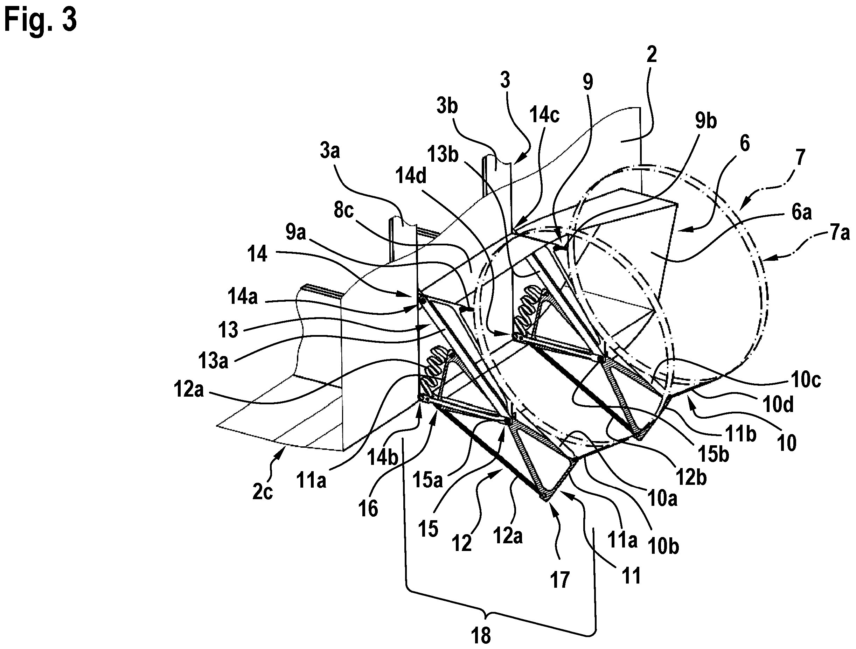

When inflated, the inflatable float bag 7a should be stabilized. More specifically, the inflatable float bag 7a is connected to the sponson 6a via at least one float bag stabilization device that is configured for stabilizing the inflatable float bag 7a in inflated state during an emergency floatation case. Such float bag stabilization device is shown in more detail in Figure 3.

Figure 3 shows the sponson 6a of Figure 2 with partially omitted sponson compartment covers. Illustratively, the fuselage frames 3a, 3b connect and support the sponson 6a through an associated side wall of the fuselage 2. At least one float bag stabilization device 18 is stabilizing the inflatable float bag 7a in a float bag stabilization position 17.

As shown in Figure 3, the sponson 6a comprises at least one sponson carrier frame 13a. By way of example, the sponson 6a comprises two sponson carrier frames 13 including the sponson carrier frame 13a that connects to the fuselage frame 3a and a second sponson carrier frame 13b that connects to the fuselage frame 3b. If desired, the sponson carrier frame 13a and the fuselage frame 3a may be arranged in the same plane and, likewise, the upper fixation girt 9a and the lower fixation girts 10a, 10b may also be substantially arranged therein. Similarly, the second sponson carrier frame 13b and the fuselage frame 3b may be arranged in the same plane and, likewise, the upper fixation girt 9b and the lower fixation girts 10c, 10d may be substantially arranged therein.

Illustratively, the sponson carrier frames 13 and the pivotable attachment devices 11 may transfer loads of the inflatable float bag 7a to the fuselage 2, especially to the fuselage frames 3.

More specifically, the inflatable float bag 7a is connected to the sponson 6a via at least one float bag stabilization device 18 comprising at least one first fixation girt, e. g., the upper fixation girt 9a, and at least one pivotable attachment device, e. g., the first pivotable attachment device 11a.

The upper fixation girt 9a attaches the inflatable float bag 7a to the at least one sponson carrier frame 13a, and the first pivotable attachment device 11a is attached to the inflatable float bag 7a via at least one second fixation girt and at least one third fixation girt, e. g., the lower fixation girt 10a and the lower fixation girt 10b. By way of example, the at least one pivotable attachment device 11a comprises an at least essentially triangular shape.

As shown in Figure 3, the first pivotable attachment device 11a is pivotable around an associated pivot hinge 15a between a storage position 16 and the float bag stabilization position 17. The first pivotable attachment device 11a is pivotable around the pivot hinge 15a within an angle range from 90° to 180°.

Illustratively, the first pivotable attachment device 11a is at least essentially accommodated in the sponson 6a in the storage position 16. The retention strap 12a that connects the first pivotable attachment device 11a and the sponson carrier frame 13a may be in loosely stacked condition and housed within the sponson compartment when the first pivotable attachment device 11a is at least essentially accommodated in the sponson 6a in the storage position 16. If desired, the first pivotable attachment device 11a may be entirely housed within the sponson 6a in the storage position 16.

Upon occurrence of the emergency floatation case, the first pivotable attachment device 11a pivots around the pivot hinge 15a from the storage position 16 into the float bag stabilization position 17. The retention strap 12a that connects the first pivotable attachment device 11a and the sponson carrier frame 13a is tensioned when the first pivotable attachment device 11a is in the float bag stabilization position 17.

If desired, the second pivotable attachment device 11b may be configured similarly to the first pivotable attachment device 11a. By way of example, the second pivotable attachment device 11b is pivotable around another associated pivot hinge 15b between a storage position and a float bag stabilization position within an angle range from 90° to 180°.

Illustratively, the second pivotable attachment device 11b may at least be essentially accommodated in the sponson 6a in the storage position and pivotable around the pivot hinge 15b upon occurrence of the emergency floatation case from the storage position into the float bag stabilization position. The second retention strap 12b that connects the second pivotable attachment device 11b and the second sponson carrier frame 13b may be tensioned to hold the second pivotable attachment device 11b in the float bag stabilization position.

That is, the inflatable float bag 7a may be attached at two sections to the first and second pivotable attachment devices 11a, 11b and two upper fixation girts 9a, 9b. Such inflatable float bag 7a may pivot around an axis defined by two pivot hinges 15. However, if desired, the inflatable float bag 7a may be attached at only one section to the first pivotable attachment device 11a and the upper fixation girt 9a.

By way of example, at least one fuselage frame, e. g. the fuselage frame 3a provides a first attachment point, e. g. an upper fuselage attachment point 14a and a second attachment point, e. g. a lower fuselage attachment point 14b. The two fuselage attachment points are spaced apart from each other. If desired, more fuselage attachment points 14 may be provided. Illustratively, the second fuselage frame 3b may provide an upper fuselage attachment point 14c and a lower fuselage attachment point 14c, which are spaced apart from each other. At the fuselage attachment points 14, the structural parts of the sponson 6a, such as the sponson carrier frames 13, connect to the fuselage frames 3.

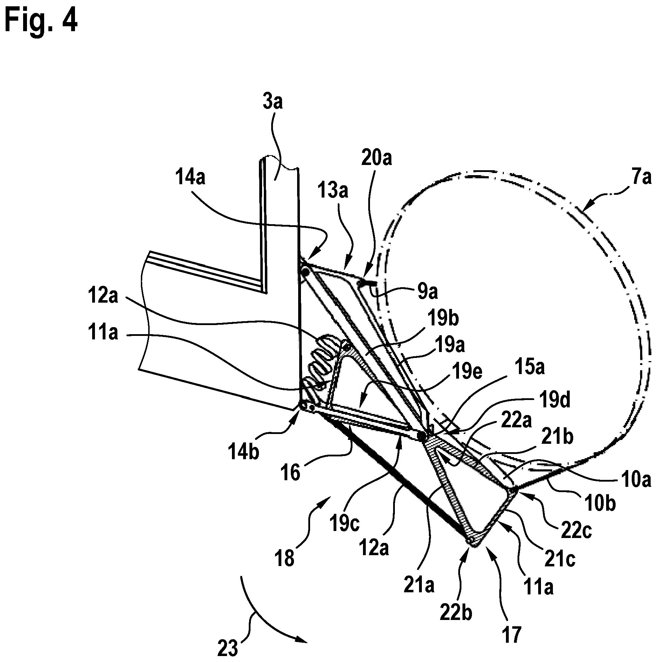

Figure 4 shows the sponson carrier frame 13a that is connected to the fuselage frame 3a at the upper fuselage attachment point 14a with the side walls of the fuselage 2 being omitted. It should be noted that the sponson carrier frame 13a as well as the structures attached thereto are illustrated in Figure 4 representative of both sponson carrier frames 13a, 13b in Figure 3. Therefore, the description of the sponson carrier frame 13a may be likewise applied to the sponson carrier frame 13b.

By way of example, the sponson carrier frame 13a comprises at least a first strut 19b which is mounted to the fuselage 2. The first strut 19b may be attached to a first fuselage attachment point, e. g., the upper fuselage attachment point 14a. That is, the first strut 19b may be an upper strut which is illustratively mounted to the fuselage frame 3a at the upper fuselage attachment point 14a.

If desired, the sponson carrier frame 13a may further comprise a second strut 19c which is mounted to the fuselage 2. The second strut 19d may be attached to a second fuselage attachment point, e. g., the lower fuselage attachment point 14b. Illustratively, the second strut 19c may be a lower strut that is connected to the fuselage frame 3a at the lower fuselage attachment point 14b. If desired, an addition lower strut 19c may be provided in parallel to the lower strut 19c such that the two lower struts 19c may form a parallel rod linkage 19e with a gap therebetween. By way of example, the first pivotable attachment device 11a may pivot around the pivot hinge 15a and pass through the gap of the parallel rod linkage 19e.

Illustratively, the upper strut 19b and the lower strut 19c are interconnected via the pivot hinge 15a. As such, the pivot hinge 15a may act as a strut connecting point 19d. The upper strut 19b and the lower strut 19c may form a triangular shape with the fuselage 2, the fuselage being represented by the fuselage frame 3a in Figure 4.

The sponson carrier frame 13a may comprise a sponson former 19a which is also connected to the pivot hinge 15a. Illustratively, the sponson former 19a is connected to the upper strut 9b at the upper fuselage attachment point 14a and at the pivot hinge 15a.

By way of example, the sponson former 19a may further be attached to the first upper fixation girt 9a. Illustratively, the sponson former 19a may be attached to the first upper fixation girt 9a at an upper fixation girt attachment point 20a.

A lower fixation girt attachment point may be provided at the first pivotable attachment device 11a. As shown in Figure 4, the first pivotable attachment device 11a comprises a first mounting area 22a, a second mounting area 22b, and a third mounting area 22c. The third mounting area 22c may act as a lower fixation girt attachment point connected to lower fixation girts 10a, 10b.

More specifically, the first mounting area 22a is pivotally mounted to the sponson carrier frame 13a via the associated pivot hinge 15a, the second mounting area is attached to the sponson carrier frame 13a via the retention strap 12a, and the third mounting area 22c is attached to the second fixation girt 10a and the third fixation girt 10b.

Illustratively, the first mounting area 22a is spaced apart from the second mounting area 22b. By way of example, the second mounting area 22b is spaced apart from the third mounting area 22c. As such, the first, second, and third mounting areas 22a, 22b, 22c may act as three extremities of the essentially triangular shape of the first pivotable attachment device 11a.

By way of example, the first pivotable attachment device 11a comprises at least a first attachment bar 21a, a second attachment bar 21b, and a third attachment bar 21c. Illustratively, the first attachment bar 21a is connected to the second attachment bar 21b at the first mounting area 22a and to the third attachment bar 21c at the second mounting area 22b, and the second attachment bar 21b is connected to the third attachment bar 21c at the third mounting area 22c. The three attachment bars 21a, 22b, 22c may act as pivotable lower fixations attachment bars.

If desired, when the first pivotable attachment device 11a is accommodated in the sponson 6a in the storage position 16, the second attachment bar 21b may be essentially positioned within the parallel rod linkage 19e such that the first attachment bar 21a, the third attachment bar 21c, and the retention strap 12a are essentially positioned above the parallel rod linkage 19e and housed within the sponson 6a. Upon occurrence of the emergency floatation case, the first pivotable attachment device 11a passes through the parallel rod linkage 19e and pivots from the storage position 16 in a pivoting direction 23 to the float bag stabilization position 17, and the inflatable float bag 7a is inflated to reach the inflated state.

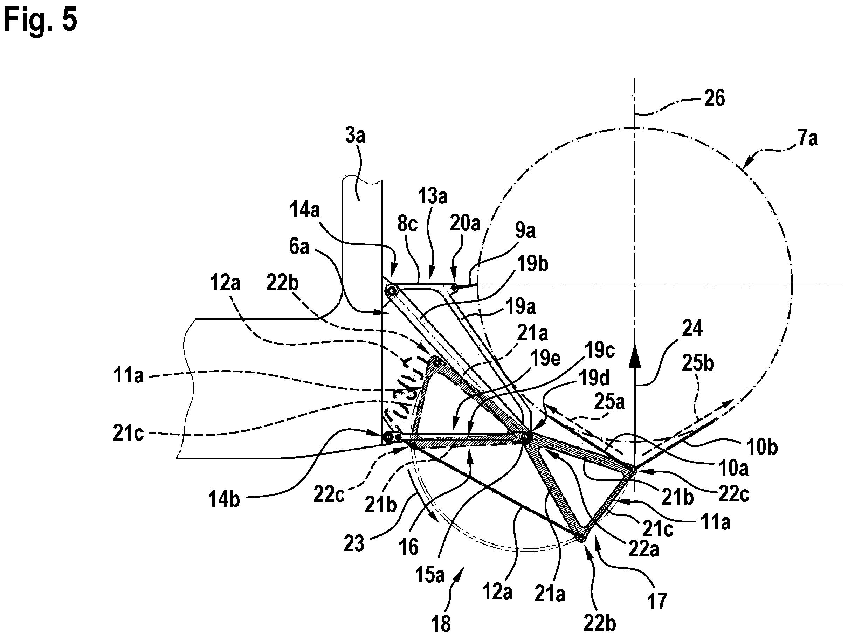

Figure 5 shows a sectional view of the inflatable float bag 7a in the inflated state which is stabilized by the float bag stabilization device 18 with the first pivotable attachment device 11a in the float bag stabilization position 17. Figure 6 shows a sectional view of the inflatable float bag 7a in uninflated state which is accommodated in the float bag accommodation 8, whereas the first pivotable attachment device 11a is essentially housed within the sponson 6a in a sponson compartment 28. Illustratively, the sponson compartment 28 is separated from the float bag accommodation 8 at least by means of the sponson compartment lateral cover 8a.

As shown in Figure 5 in dashed lines and in Figure 6 in solid lines, the first pivotable attachment device 11a is illustrated in the storage position 16 with the retention strap 12a in loosely stacked condition. The storage position 16 may correspond to an initial position of the first pivotable attachment device 11a with the inflatable float bag 7a in uninflated state.

As shown in Figure 6, the inflatable float bag 7a in uninflated state which is accommodated in the float bag accommodation 8 in the sponson 6a is covered by an external cover 27.

By way of example, a compressed air bottle 29 is stowed in the sponson compartment 28 for inflating the inflatable float bag 7a upon occurrence of the emergency floatation case. Once the inflation of the inflatable float bag 7a is initiated, the first pivotable attachment device 11a swivels out of the sponson compartment 28 around the pivot hinge 15a in the pivoting direction 23. Such swiveling extraction process may be managed automatically by the inflation process of the inflatable float bag 7a, as the inflatable float bag 7a pushes itself out of the float bag accommodation 8 during inflating while remaining attached to the upper fixation girt 9a. The weight of the first pivotable attachment device 11a may also contribute to this extraction process.

Referring now to Figure 5, the first pivotable attachment device 11a pivots from the storage position 16 in the pivoting direction 23 to the float bag stabilization position 17, where the first pivotable attachment device 11a is illustrated in solid lines. The first pivotable attachment device 11a is pivotable around the pivot hinge 15a within an angle range from 90° to 180°. By way of example, such an angle range may be represented between the pivotable lower fixations attachment bar 21a in dashed lines and the same pivotable lower fixations attachment bar 21a in solid lines.

The inflation process of the inflatable float bag 7a and extraction process of the first pivotable attachment device 11a are finished once the retention strap 12a is fully extended and tensioned. The inflatable float bag 7a in the inflated state then provides a buoyancy force 24 for holding the helicopter 1 on water. For instance, the buoyancy force 24 of the inflatable float bag 7a is reacted at the third mounting area 22c by the two lower fixation girts forces 25a, 25b provided by the two lower fixation girts 10a, 10b.

Illustratively, the third mounting area 22c of the first pivotable attachment device 11a is at least positioned near a center line 26 of the inflatable float bag 7a in inflated state. If desired, the two lower fixation girts 10a, 10b that are fixed to the lower side of the inflatable float bag 7a and to the third mounting area 22c may essentially be symmetrically arranged with respect to the center line 26.

By way of example, the center line 26 of the inflatable float bag 7a in inflated state may essentially correspond to the line of action of the buoyancy force 24 of the inflatable float bag 7a which passes through the center of lift of the inflatable float bag 7a. As a result, the entire buoyancy load may be transferred at the third mounting area 22c such that the upper fixation girt 9a may remain unloaded.

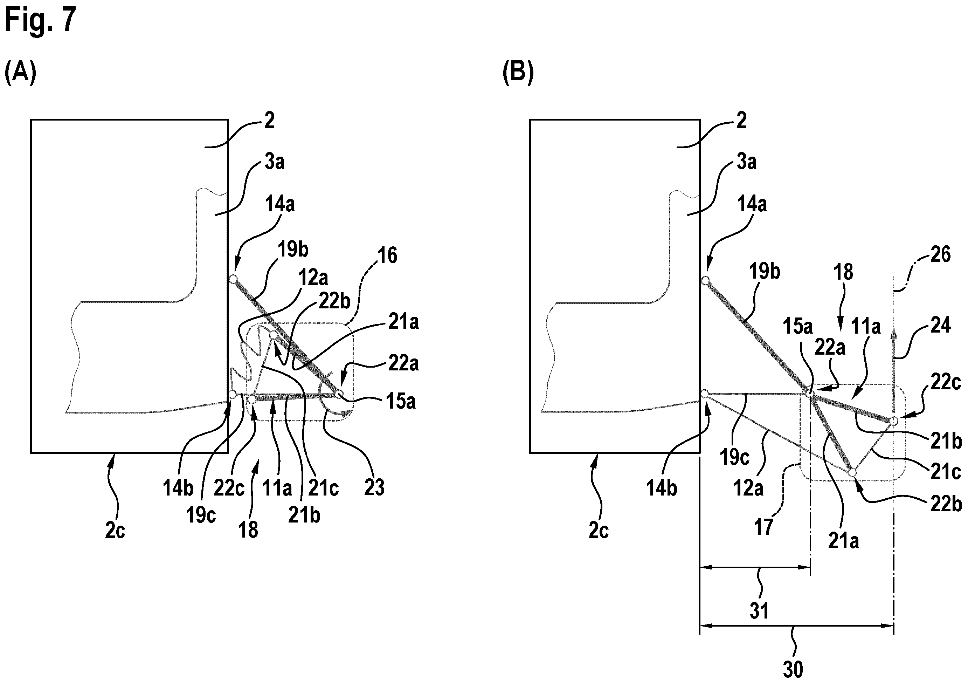

Illustratively, the third mounting area 22c of the pivotable attachment device 11a in the float bag stabilization position 17 reaches a point which is laterally away from the lateral outermost border of the sponson 6a, which is shown in further details in part (B) of Figure 7.

Figure 7 shows in part (A) the float bag stabilization device 18 when the pivotable attachment device 11a is in the storage position 16, and in part (B) the float bag stabilization device 18 when the pivotable attachment device 11a is in the float bag stabilization position 17.

In Figure 7, the compressed elements are represented with thick lines, whereas the tensioned elements are represented with thin lines. Illustratively, the compressed elements comprise the upper strut 19b, the first attachment bar 21a, and the second attachment bar 21b, whereas the tensioned elements comprise the retention strap 12a and the lower strut 19c.

Referring to part (B) of Figure 7, the buoyancy load 24 acts on the outermost point, i. e. the third mounting area 22c of the pivotable attachment device 11a in the float bag stabilization position 17. Illustratively, a first distance 30 between the third mounting area 22c of the pivotable attachment device 11a in the float bag stabilization position 17 and the fuselage 2 is greater than a second distance 31 between the pivot hinge 15a and the fuselage 2.

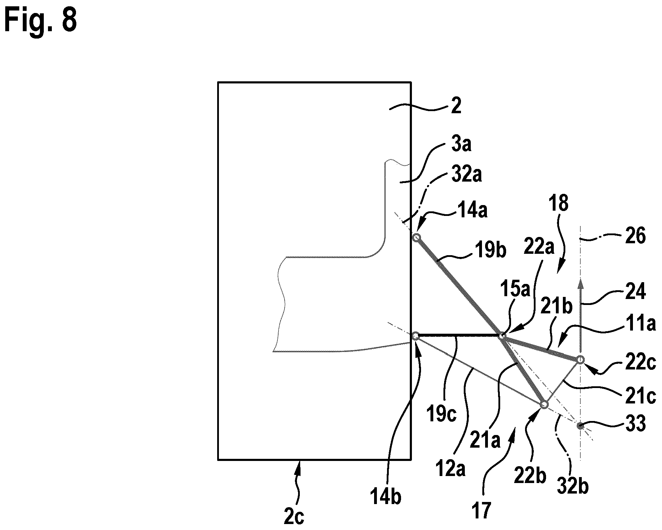

Figure 8 shows another functioning principle of the float bag stabilization device 18 when the pivotable attachment device 11a is in the float bag stabilization position 17.

As shown in Figure 8, in the inflated state of the inflatable float bag 7a the first strut 19b comprises a first line of action 32a, the retention strap 12a comprises a second line of action 32b, and the inflatable float bag 7a comprises a third line of action. The third line of action is the center line 26 of the inflatable float bag 7a in inflated state and essentially corresponds to the line of action of the buoyancy force 24.

Illustratively, the first line of action 32a, the second line of action 32b, and the third line of action 26 intersect in a common intersection point 33. As such, the lower strut 19c may become load free.

It should be noted that the above described embodiments are merely described to illustrate possible embodiments of the present invention, but not in order to restrict the present invention thereto. Instead, multiple modifications and variations of the above described embodiments are possible and should, therefore, also be considered as being part of the invention.

For instance, according to Figure 1 the inflatable float bag 7a has a substantially cylindrical shape. However, if desired, the inflatable float bag 7a may also have other shapes such as e. g. a spherical shape.

Furthermore, according to Figure 3, the inflatable float bag 7a is connected to the sponson 6a via two identical float bag stabilization devices 18 at two parallel sections. However, if desired, the float bag stabilization devices 18 may be positioned in two planes that are canted from each other. In this case, as mentioned above, the shape of the inflatable float bag 7a may not necessarily be cylindrical.

Moreover, if desired, the inflatable float bag 7a may be connected to the sponson 6a via only one float bag stabilization device 18. Alternatively, the inflatable float bag 7a may be connected to the sponson 6a at two or more sections but stabilized via only one float bag stabilization device 18 at one section.

### Reference List

1 rotorcraft
2 fuselage
2a cabin
2b cockpit
2c lower fuselage region
2d upper fuselage region
3 fuselage frames
3a, 3b fuselage frames
4 tail boom
4a horizontal stabilizer
5 vertical stabilizer
6 sponsons
6a portside sponson
6c starboard side sponson
7 emergency floatation system
7a portside rear float bag
7b portside front float bag
7c starboard side rear float bag
7d starboard side front float bag
8 portside sponson rear float bag accommodation
8a sponson compartment lateral cover
8b sponson compartment lower cover
8c sponson compartment upper cover
9 float bag upper fixations
9a, 9b upper fixation girts
10 float bag lower fixations
10a, 10b, 10c, 10d lower fixation girts
11 pivotable lower fixations attachment device
11a, 11b pivotable lower fixations attachment device
12 retention straps
12a, 12b retention strap
13 sponson carrier frames
13a, 13b sponson carrier frame
14 fuselage attachment points
14a, 14c upper fuselage attachment points
14b, 14d lower fuselage attachment points
15 pivot hinges
15a, 15b pivot hinge
16 pivotable lower fixations attachment storage position
17 float bag stabilization position
18 float bag stabilization device
19a sponson former
19b upper strut
19c lower strut
19d strut connecting point
19e parallel rod linkage
20a upper fixation girt attachment point
21a, 21b, 21c pivotable lower fixations attachment bars
22a, 22b, 22c mounting areas
23 pivoting direction
24 buoyancy force
25a, 25b lower fixation girts forces
26 inflated float bag center line and line of action
27 external cover
28 sponson compartment
29 compressed air bottle
30 distance between fuselage and outermost position of pivotable lower fixations attachment device
31 distance between fuselage and outermost border of sponson
32a line of action of upper strut
32b line of action of retention strap in tensioned state
33 intersection point

## Claims

1. A rotorcraft (1) with a fuselage (2) and at least one sponson (6a) that protrudes laterally from the fuselage (2) and comprises at least one sponson carrier frame (13a), wherein the at least one sponson (6a) provides a float bag accommodation (8) that is configured for accommodating an inflatable float bag (7a) in uninflated state, wherein the inflatable float bag (7a) is connected to the at least one sponson (6a) via at least one float bag stabilization device (18) that is configured for stabilizing the inflatable float bag (7a) in inflated state during an emergency floatation case, and wherein the at least one float bag stabilization device (18) comprises:
at least one first fixation girt (9a) that attaches the inflatable float bag (7a) to the at least one sponson carrier frame (13a); and
at least one pivotable attachment device (11a) that is attached to the inflatable float bag (7a) via at least one second fixation girt (10a) and at least one third fixation girt (10b), comprising:
a first mounting area (22a) that is pivotally mounted to the at least one sponson carrier frame (13a) via an associated pivot hinge (15a),
a second mounting area (22b) that is attached to the at least one sponson carrier frame (13a) via a retention strap (12a), and
a third mounting area (22c) that is attached to the at least one second fixation girt (10a) and the at least one third fixation girt (10b).

2. The rotorcraft (1) of claim 1, wherein the first mounting area (22a) is spaced apart from the second mounting area (22b); and wherein the second mounting area (22b) is spaced apart from the third mounting area (22c).

3. The rotorcraft (1) of claim 1 or 2, wherein the at least one pivotable attachment device (11a) comprises an at least essentially triangular shape.

4. The rotorcraft (1) of any one of the preceding claims, wherein the at least one pivotable attachment device (11a) comprises at least a first attachment bar (21a), a second attachment bar (21b), and a third attachment bar (21c); wherein the first attachment bar (21a) is connected to the second attachment bar (21b) at the first mounting area (22a) and to the third attachment bar (21c) at the second mounting area (22b); and wherein the second attachment bar (21b) is connected to the third attachment bar (21c) at the third mounting area (22c).

5. The rotorcraft (1) of any one of the preceding claims, wherein the at least one pivotable attachment device (11a) is at least essentially accommodated in the at least one sponson (6a) in a storage position (16); and wherein the at least one pivotable attachment device (11a) is pivotable around the pivot hinge (15a) upon occurrence of the emergency floatation case from the storage position (16) into a float bag stabilization position (17).

6. The rotorcraft (1) of claim 5, wherein a first distance (30) between the third mounting area (22c) of the at least one pivotable attachment device (11a) in the float bag stabilization position (17) and the fuselage (2) is greater than a second distance (31) between the pivot hinge (15a) and the fuselage (2).

7. The rotorcraft (1) of claim 5 or 6, wherein the third mounting area (22c) is at least positioned near a center line (26) of the inflatable float bag (7a) in inflated state.

8. The rotorcraft (1) of any one of claims 5 to 7, wherein the at least one pivotable attachment device (11a) is pivotable around the pivot hinge (15a) within an angle range from 90° to 180°.

9. The rotorcraft (1) of any one of the preceding claims, wherein the at least one sponson carrier frame (13a) comprises at least a first strut (19b) which is mounted to the fuselage (2), and a second strut (19c) which is mounted to the fuselage (2); and wherein the first strut (19b) and the second strut (19c) are interconnected via the pivot hinge (15a).

10. The rotorcraft (1) of claim 9, wherein the fuselage (2) comprises at least one fuselage frame (3a) which provides a first attachment point (14a) and a second attachment point (14b) which are spaced apart from each other; wherein the first strut (19b) is attached to the first attachment point (14a); and wherein the second strut (19c) is attached to the second attachment point (14b).

11. The rotorcraft (1) of claim 9 or 10, wherein the at least one sponson carrier frame (13a) comprises a sponson former (19a) which is connected to the first strut (19b) at the first attachment point (14a) and at the pivot hinge (15a); and wherein the sponson former (19a) is attached to the at least one first fixation girt (9a).

12. The rotorcraft (1) of any one of claims 9 to 11, wherein the first strut (19b) and the second strut (19c) form a triangular shape with the fuselage (2).

13. The rotorcraft (1) of any one of claims 9 to 12, wherein in the inflated state of the inflatable float bag (7a) the first strut (19b) comprises a first line of action (32a), the retention strap (12a) comprises a second line of action (32b), and the inflatable float bag (7a) comprises a third line of action (26); and wherein the first line of action (32a), the second line of action (32b), and the third line of action (26) intersect in a common intersection point (33).

14. The rotorcraft (1) of any one of the preceding claims, wherein the at least one sponson (6a) comprises a sponson compartment (28) that is separated from the float bag accommodation (8) at least by means of a lateral cover (8a); and wherein a compressed air bottle (29) is stowed in the sponson compartment (28) for inflating the inflatable float bag (7a) upon occurrence of the emergency floatation case.

15. The rotorcraft (1) of any one of the preceding claims, wherein the inflatable float bag (7a) in uninflated state which is accommodated in the float bag accommodation (8) in the at least one sponson (6a) is covered by an external cover (27).
